# EUROPEAN PATENT APPLICATION

(11) **EP 2 213 569 A1**
(43) Date of publication of application: **04.08.2010**
(21) Application number: 10000967.9
(22) Date of filing: 01.02.2010
(51) Int. Cl.: B64C 3/48, B63B 1/28

(54) **Dynamic fin comprising coupled fin sections**

(30) Priority: 03.02.2009 NL 2002486
(71) Applicant: Van Gelder, Klaas Boudewijn, 2282 NW Rijswijk (NL)
(72) Inventor: Van Gelder, Klaas Boudewijn, 2282 NW Rijswijk (NL)
(74) Representative: Baeten, Ernest

(57) **Abstract**

A dynamic or aerodynamic fin comprising at least two parallel arranged fin sections. At least one fin section comprises a rotational axis for installing the fin section by a rotation shaft. An end stop is provided for stopping the rotational movement of the fin section to define an extreme position. In the extreme position the fin sections provide a substantially cambered shape to the fin. The dynamic fin is improved in that it comprises a pair of coupling elements. A first fin section is coupled to a second adjacent fin section by a pair of a first and second coupling element. The first coupling element is complementary to the second coupling element. The first coupling element is part of, preferably integral, with the first fin section and the second coupling element is part of, preferably integral, with the second fin section.

## Description

The present invention relates to a dynamic fin which comprises at least two parallel arranged fin sections. An orthogonal coordinate system including a first, second and third axis can be defined, wherein the fin sections extend in a direction of the first axis. Generally, this first direction is also regarded as the longitudinal direction. At least one fin section comprises a rotational axis for installing the fin section by a rotation shaft in for example a mounting box. The rotational axis extends in the direction of the fin section and enables a rotational movement of the fin section. An end stop is provided for stopping the rotational movement of the fin section to define an extreme position. In the extreme position the fin sections provide a substantially cambered shape to the fin. This cambered shape improves the hydro- or aerodynamic properties of the fin. In the other extreme position the fin may form a mirrored cambered shape in comparison with the cambered shape in the first extreme position.

Such a dynamic, in particular a hydrodynamic fin is known from the American patent US5.181.678. In figure 14 of this American patent, a fin is shown, which is built from multiple rigid fin sections. The fin sections are joined together by means of hinges. Two adjacent fin sections are provided with holes which form a first part of the hinge. The holes of two adjacent fin sections can be aligned, were after an additional pen can be mounted to complete the hinge.

Such a pin-hole hinge construction between adjacent fin sections brings some problems. A first problem relates to the manufacturing of the fin sections. To manufacture the fin section, some extra machining operations like milling and drilling are necessary to manufacture the holes in the fin sections. Especially, in an embodiment of the dynamic fin for a surfboard, wherein the pin-hole hinge has to be very small, it may be a major problem to manufacture the hinge because of a limited available space for machining tools to access the fin. Generally, the fin sections are made from a basic shape which is manufactured by machining of a prefab plate material, like epoxy plate which may be reinforced by glass fibres e.g. G10 or moulding of a laminated prepreg material, like epoxy including glass-fibres or carbon-fibres or injection moulding of a polymer material.

Further operations are necessary, to provide the fin with the pin-hole hinge construction. The construction of the pin-hole is rather detailed which complicates the manufacturing and the assembling of the components. Those further operations increase production efforts and costs.

Another problem of the known hinge-construction is that it is susceptible for contamination. An environment with dirt, sand or salt may cause a failure of the pin-hole hinge construction.

It is an object of the present invention to overcome at least partially one or more of the above-mentioned drawbacks and/or to provide a useable alternative. In particular, the invention aims to provide a dynamic fin which is more simple to manufacture and/or to assemble and thus more cost effective and more durable.

This objective is achieved by a dynamic fin as defined in claim 1.

A dynamic fin according to the invention comprises at least two parallel arranged fin sections. An orthogonal coordinate system including a first, second and third axis can be defined, wherein the fin sections extend in a direction of the first axis. Generally, this first direction is also regarded as the longitudinal direction, wherein the fin sections extend away from a base which may define a base plane including the second and third axis. The base plane may be flat. The third axis is generally regarded as an outward direction which extends away from the substantially smooth and flat outer surfaces of the fin. At least one fin section comprises a rotational axis for installing the fin section by a rotation shaft to for example a mounting box. The rotational axis extends in the direction of the fin section and enables a rotational movement of the fin section. An end stop is provided for stopping the rotational movement of the fin section to define an extreme position. In the extreme position the fin sections provide a substantially cambered shape to the fin. This cambered shape improves the hydro- or aerodynamic properties of the fin.

The dynamic fin according to the invention is improved in that it comprises a pair of coupling elements. According to the invention a first fin section is coupled to a second adjacent fin section by a pair of a first and second coupling element. The first coupling element is complementary to the second coupling element. The coupling elements provide a coupling of adjacent fin sections in a direction of the third axis. The third direction is a direction outwards the outer surface of fin. Herewith, the second adjacent fin section will follow a rotational movement of the first fin section in the third direction around the first axis. The relative rotational movement of the fin sections makes the fin dynamic. If the first fin section rotates clockwise, the second coupled fin section will rotate counter-clockwise.

The first coupling element is part of, preferably integral, with the first fin section and the second coupling element is part of, preferably integral, with the second fin section. Preferably, the coupling elements are made of the same material as the fin sections. Herewith, advantageously, the coupling elements may be integrally manufactured to the fin sections, by for example moulding or machining. The insight that only a coupling in the direction of the third axis, which is generally the transversal direction, between two adjacent fin sections is necessary, instead of a hinge with a pin and a hole gives the advantage that the dynamic fin may be manufactured by just a few operations. No complex shapes, like slotted holes with accurate tolerances need to be made. No extra components like pins are needed to assemble the dynamic fin. The complete dynamic fin may be easier to assemble as a result of the more simple connection between the fin sections.

A further advantage is that instead of a permanent hinge construction, the coupling may be released manually. This may be advantageous for example for cleaning the fin. It may even be possible to release the coupling without a hand tool. Especially in a rough environment with mud, sand and salt this may be advantageous. The fin according to the invention may be easy disassembled to clean the fin sections. Cleaning the fin sections may improve the lifetime of the fin. Preferably, the coupling elements are rigid which allows well-defined extreme positions and may reduce a risk of damages.

In an embodiment of the dynamic fin according to the invention, the fin sections are rotatable from one extreme position to another extreme position under a substantially constant resistance. No springs or elastic materials are provided which would substantially increase the resistance from a nominal position to an extreme position. The substantially constant resistance may increase the effectiveness of the dynamic fin. This substantially constant resistance allows the fin sections to change quickly from one camber into another. The fin sections may get already into one of the extreme positions, while the dynamic forces on the fin are still relative small. The degree of rotation of the fin sections may be independent of the amount of the hydro- or aerodynamic force on the fin. Herewith, the fin provides a substantially increase of effectiveness, which may be already available at a low speed.

In a particular embodiment of the dynamic fin according to the invention, the first coupling element is formed by a groove which extends in the first direction, which is generally the longitudinal direction, along an edge of the first fin section. Preferably, the groove extends over substantially the whole length over the first fin section. An adjacent fin section having a complementary coupling element may be coupled to the first fin section by inserting the second coupling element into the groove. It may be advantageous when the coupling elements extend over substantially the whole length of the fin sections, because this may improve an alignment of the fin sections and may provide a strong coupling which may withstand a bigger hydro- or aerodynamic load.

The groove of the first coupling element defines a receiving opening into which the complementary coupling element of the second fin section can be inserted, e.g. by sliding of the fin sections in the longitudinal direction. Preferably, the second coupling element may be formed by an outer tongue which is complementary shaped with respect to the groove of the first coupling element. The tongue may extend in a longitudinal direction along an edge of the fin section. The complementary groove and tongue may be positioned onto a section surface of the adjacent fin sections. The section surfaces may be brought opposite to each other to assemble the tongue into the groove, e.g. by sliding the fin sections relative to each other in the longitudinal direction.

Preferably, the cross section of one or both coupling elements is symmetrical to allow a symmetrical rotational movement of adjacent fin sections from a nominal position. The cross section may have an axis of symmetry which extends in a direction of the second axis of the orthogonal coordinate system.

In a preferred embodiment of the dynamic fin according to the invention, the first and/or the second coupling element comprise in the longitudinal direction a constant shape in a cross section, in particular parallel to a plane in the second and third direction. This constant shape may be advantageous because it may provide an opportunity to manufacture the fin section including the coupling element by machining or moulding. The constant shape allows a removal of the fin section including the coupling element out of a mould in just one direction. Advantageously, due to the constant shape, the mould may remain of a simple design.

In a further preferred embodiment the constant shape becomes smaller in dimensions in a direction from a base or foot of the fin to a tip of the fin section. The smaller dimensions to the tip of the fin section may provide an improved removal from the mould. Additionally, a further advantage occurs during use of the dynamic fin. The decreasing dimensions of the constant shape of the coupling element provide a unique way to assemble two fin sections. During assembly of the two fin sections the corresponding coupling elements may slide along each other in the longitudinal direction until the coupling elements engage to each other. Herewith, the dimensions of the shape of the coupling elements in the longitudinal direction define the positioning of the fin sections. The simple way of sliding the coupling elements along each other provides advantageously an easy way to mount or demount the dynamic fin. This may be useful, for example to clean or otherwise service or inspect the dynamic fin. Herewith, the fin sections may be easily manually releasable without any further tools to remove bolts, pins or the like. The simple and smart releasing of the fin sections may be robust which may decrease the risks of damaging the fin during mounting and demounting.

In a further embodiment of the dynamic fin according to the invention the groove of the first coupling element comprises in a cross section, parallel to the plane defined by the second and third axis, an inner rounded, in particular circular part for receiving a second coupling element which comprises an outer rounded, in particular circular part in a transversal cross section. The circular cross sections define rounded outer surfaces which may improve the rotational movement of the fin sections with respect to each other. Advantageously, adjacent fin sections may better fit to each other to prevent leakages of fluid through the coupling elements. This may further improve the dynamic properties of the fin.

In a further embodiment of the dynamic fin according to the invention the first coupling element comprises a groove having a receiving opening which includes an inner protruding portion, wherein the second coupling element comprises a tongue having an outer protruding portion. The inner and outer protruding portions may engage to each other in an assembled dynamic fin, wherein the engagement of the protruding portions provide a locking of the second fin section to the first fin section in a direction away from the opening of the groove, which is in the direction of the second axis. Preferably, at least one protrusion extends over substantially the whole length of the coupling element. The locking further improves a sealing between the adjacent fin sections. A clearance between the fin sections may be closed automatically at the high-pressure side ("concave" or weather side) of the fin. Generally, a high pressure occurs at the concave side of the fin. The improved sealing may prevent a leakage via the clearance of fluid from the high pressure side, so called lower camber side, to the low pressure side, so called upper camber side (convex or lee side) of the fin. Herewith, the effectiveness of the fin may be further increased. The protruding portions may further improve the dynamic fin to withstand bigger hydro- or aerodynamic forces in a direction along the fin. Advantageously, the protruding portions may make the fin stronger.

In a further embodiment according to the invention the inner protruding portion may be formed as an end stop. Herewith the end stop is internal and integral instead of an additional component like a pin, with the first coupling element, which advantageously may result in a simpler manufacturing of the fin. The internal positioned end stop may make the fin less susceptible for damages or contaminations from outside the fin.

In an embodiment the dynamic fin according to the invention comprises a locking element. The locking element may provide for locking a rotation of the fin sections. Preferably, the locking element may be used for locking at least one extreme position of the fin sections. The locking element may be adjustable for changing an extreme position. In a particular embodiment the locking element may be applied for locking a nominal or mid position, wherein the fin is symmetrical over an axis extending in the second direction.

Further the invention relates to a watercraft, e.g. sailing ship or surfboard, provided with a dynamic fin according to the invention. The fin may be a keel, a rudder or a tunnel thruster. Generally, the fin according to the invention may be useful for applications, wherein the fin is susceptible to a interchanging positive or negative dynamic load. The fin according to the invention may typically replace conventional symmetrical fins. The fin according to the invention may provide the same effectiveness for opposite hydrodynamic loads.

Further embodiments of the dynamic fin according to the invention are described in the dependent claims.

A further elucidation of the invention will be given by the appended drawings which provide a practical embodiment of the invention, but may not be considered in a limiting sense, wherein:
Figure 1 shows a view in perspective of a dynamic fin according to the invention;
Figure 2 shows a view in more detail of an upper region of the dynamic fin of figure 1;
Figure 3 shows a cross-sectional view of a dynamic fin in a nominal and two extreme positions;
Figure 4 shows a simplified cross-sectional view of a dynamic fin in a nominal and an extreme position; and
Figure 5 shows the cross-section of figure 3 in more detail, wherein a pair of coupling elements is shown.

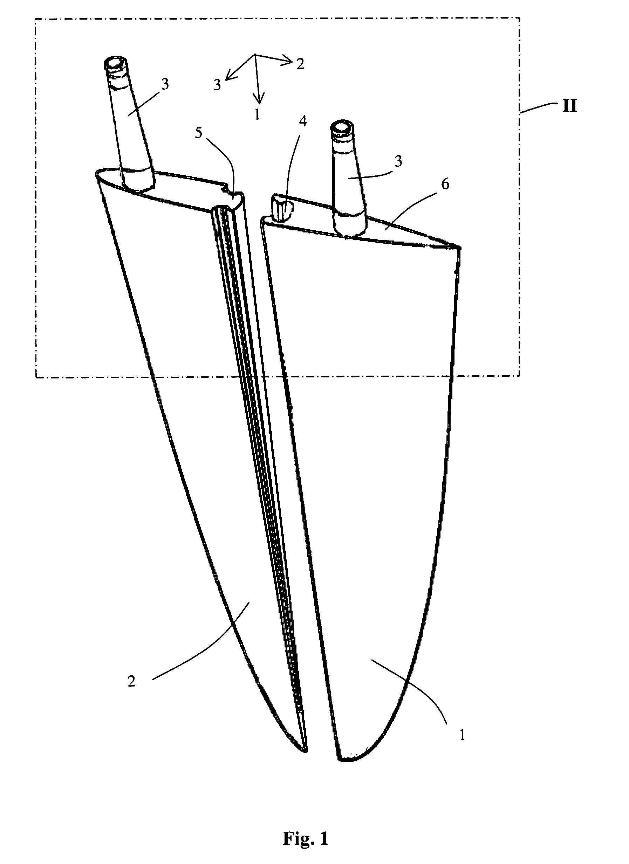

Figure 1 shows a dynamic fin according to the invention. The dynamic fin is arranged as a fin which is suitable to serve as a fin for a surf board. The fin has outer side surfaces, a base and a tip. The outer side surfaces are substantially smooth. The dynamic fin comprises two parallelly arranged fin sections. For the application as a smart fin in a surfboard, the fin sections may be made from a plastic material including eventually reinforcing fibres. The fin sections are made sufficient rigid to withstand dynamic loads. The dynamic fin is formed by a first fin section which has a rounded front edge which defines a leading edge and forms a front side of the dynamic fin. The fin has a sharp edge at a tail which defines a trailing edge. During use a fluid may flow backwards along the fin from the rounded front side to the tail. The dynamic fin has a cross-section which is shaped like an airfoil having a chord which defines an upper chamber and a lower chamber.

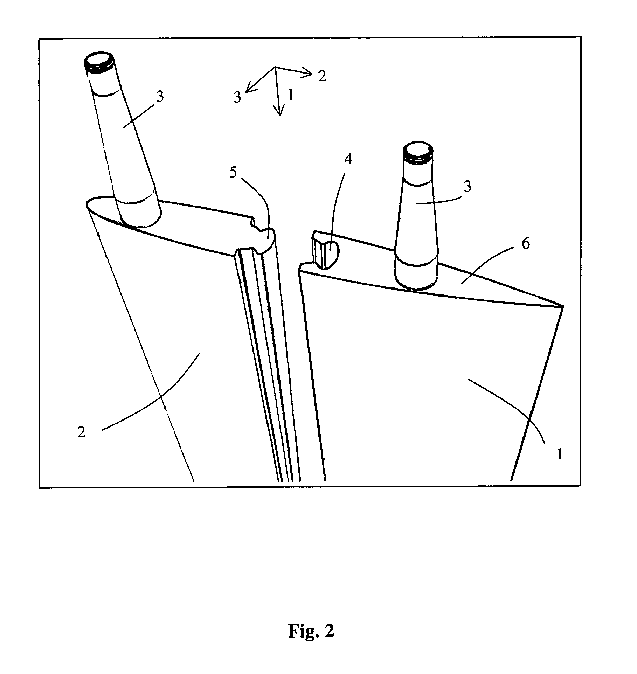

Figure 2 shows in a view in more detail an upper region of the dynamic fin as shown in figure 1. The dynamic fin may be considered as orientated in an orthogonal coordinate system. The coordinate system comprises a first, second and third axis. The fin sections extend in a longitudinal direction along the first axis. The dynamic fin may be installed to a watercraft, in particular a surfboard, by two rotation shafts 3. The rotation shaft 3 is connected to the fin section and extends in a direction parallel to the first axis. The rotation shaft may be heavily loaded and is therefore made of a strong material, like stainless steel. The rotation shaft 3 may be glued or clamped to the fin section 1, 2. The rotation shaft extends away from a mounting surface in a direction parallel to the first axis. The rotation shaft 3 is cylindrical at a bottom region. The cylindrical part extends away from the mounting surface and provides an accurate positioning of the fin section in a mounting box. As shown in figure 1 the rotation shaft has further a conical part for centring the rotational shaft in a mounting box, e.g. a Tuttle box. The geometry of the rotational shaft allows a user to quickly mount or demount the dynamic fin according to the invention.

Further, as shown in Fig. 1, the dynamic fin comprises a pair of coupling elements. The coupling elements comprise a first coupling element 4 and a second coupling element 5. The first coupling element 4 is formed as a groove which extends in the longitudinal direction along an edge of the first fin section. The second coupling element 5 is complementary shaped to the first coupling element 4. As shown in figure 1, the second coupling element 5 is formed by an outer tongue which is complementary shaped with respect to the first coupling element and extends in the longitudinal direction along a straight edge of the fin section. The coupling elements extend over substantially the whole length of the edge of the fin section. This may improve the dynamic properties of the fin, because occurring dynamic loads may be better distributed over adjacent fin sections.

The outer tongue has a constant shape which is symmetrical in cross-section. The constant shape of the coupling elements becomes smaller in a direction away from the mounting surface. Herewith, the two fin sections 1, 2 can be mounted to each other by sliding the two fin sections relative to each other in a direction parallel to the first axis. The connection of the fin sections is unambiguous and easy to make by the user. A predefined amount of play has to remain between the coupling elements to allow a certain rotational movement of the fin sections relative to each other. The length dimension of the groove and tongue is designed such that after assembling of the fin sections, this predefined amount of play is assured. In a possible embodiment, the groove in the first fin section may have an end face for stopping the sliding movement of the second fin section. The tongue 5 extends from the base of the fin, the mounting surface 6, in a longitudinal direction towards the tip and ends with a cross cut. After assembly the cross cut of the tongue 5 may be adjoined positioned to the end face of the groove 4. Herewith the cross cut of the tongue functions as a stopper to stop the sliding movement of the fin sections when they are assembled. In another embodiment, adjacent fin sections may be axially positioned by an external stopper, wherein the end face of the groove and the cross cut of the tongue are spaced apart over e.g. 2mm. The external stopper, which aligns for instance mounting surfaces of adjacent fin sections, may simplify the manufacturing of the fin.

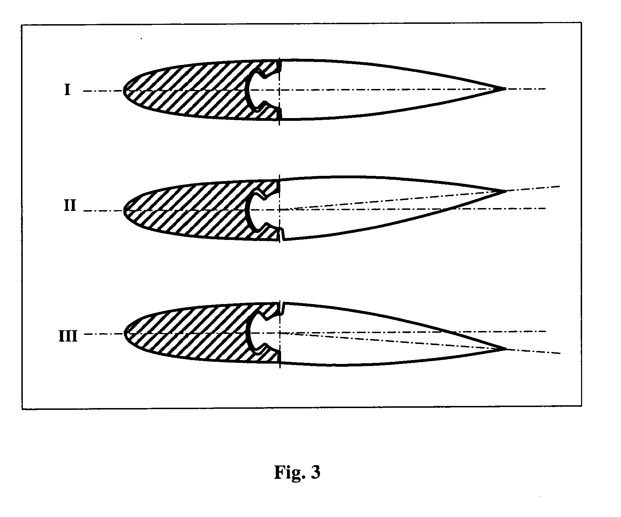

Figure 3 shows a cross-sectional top view of the dynamic fin. The dynamic fin is shown in three different positions. The first position I shows a nominal position, wherein the fin sections are aligned to each other. The resulting cross section is symmetrical in this position. The symmetrical cross section has an axis of symmetry in a direction of the second axis.

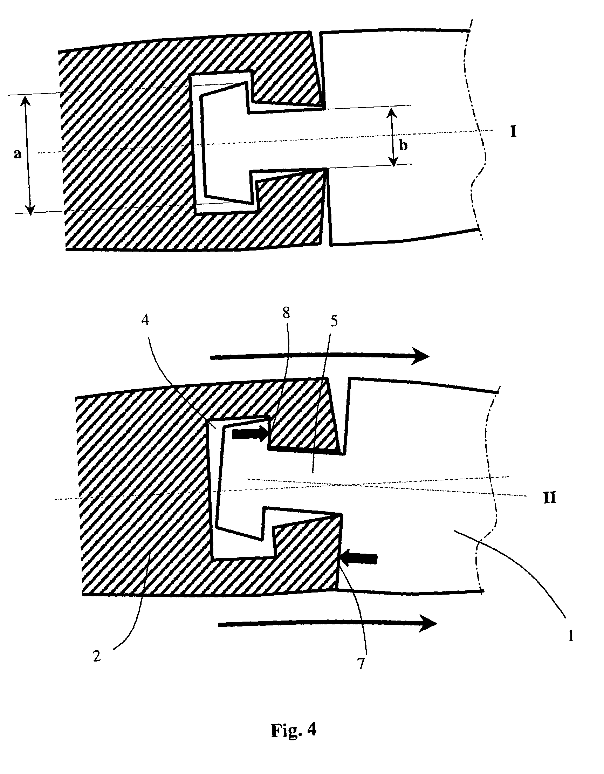

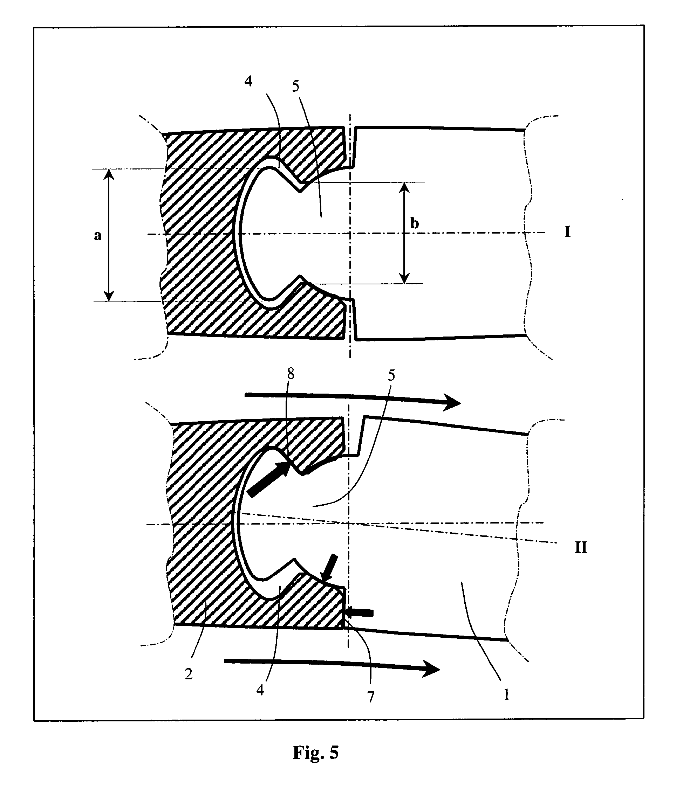

The back positioned fin section may be rotated around an axis which is parallel to the first axis of the coordinate system. The position II is an extreme position of the dynamic fin. The cross-section has a cambered, substantially air foil shape. In position II the front positioned fin section is rotated clock wise, wherein the back positioned fin section is rotated in a counter clockwise direction. An end stop which is shown in more detail in figure 4 and 5 is provided to limit the rotational movement of the fin sections to define the extreme positions II, III. The shown extreme positions II, III in figure 3 are in mirror symmetry. Herewith, the dynamic fin may obtain similar cambered shapes in its two extreme positions, which makes the dynamic fin according to the invention perfectly suitable to serve as a fin for a surfboard or sail ship. The dynamic fin according to the invention provides the same advantageous dynamic effects in opposite directions. In other words, the dynamic fin may generate an improved counter pressure to the tendency of the surfboard or sail ship to roll in both sailing directions perpendicular to the wind direction.

Figures 4 and 5 show in more detail a view of the pair of coupling elements 4, 5. Figures 4 and 5 shows the same positions I, II as shown in figure 3. Bold arrows indicate the flow of fluid along the outer surfaces of the dynamic fin. In position II a pressure difference will occur between the opposite outer surfaces. This pressure difference is, as is well known, responsible for the dynamic properties. It is important to prevent disturbances of the fluid flow. At the high pressure side of the fin, the outer side surfaces of the fin sections are smoothly aligned with each other. This prevents disturbances at the high pressure side of the fin. It has appeared that a gap at the opposite side of the fin cause hardly any disturbances to the dynamic properties.

As shown in figures 4 and 5 in cross section, the second coupling element 5 has a shape of a fungus. The fungus has a stem and a head which fits including an amount of play into a smaller and broader part of the groove 4. As shown in figure 4 the rotational movement of the fin sections is limited by an external end stop 7 and an internal end stop 8. The external end stop 7 is positioned close to the outer surfaces of the fin sections. The external ends top 7 limits the rotational movement of the fin sections. The internal end stop 8 limits also the rotational movement, but provides further a strong connection between the fin sections in a direction of the fluid flow. The internal end stop 8 is obtained by providing an inner protrusion in the groove of the first coupling element and a corresponding outer protrusion on the tongue of the second coupling element 5. As a result the groove which has a receiving opening to receive the tongue 5 of the second coupling element comprises a smaller portion which locks the tongue 5.

The fin sections rotate in an extreme position as a result of a dynamical load. Herewith no active operation by manually steering or drive means is necessary to get the dynamic fin according to the invention in one of the extreme positions. Herewith, the dynamic fin may be classified as a passive fin, which makes it as in particular suitable to serve as a keel.

The end stops 7, 8 define contact areas between the fin sections. These contact areas provide an additional advantage effect in that they prevent also a leakage of fluid from one side of the fin to the other side. A leakage of fluid would influence the pressure difference created by the dynamic effect and is therefore not desired.

The smooth transition of the outer surfaces of the fin sections created by the external stop 7 may prevent swirls in the passing fluid which further increases the dynamic properties of the fin.

The smaller portion in the groove 4 is indicated with letter "b". The larger portion on the tongue 5 is indicated with letter "a". The smaller dimension "b" provide a lock to the broadened portion of the tongue 5 to remove the fin section in a direction away from the receiving opening.

Figure 5 corresponds to figure 4 and shows a cross-sectional view of a dynamic fin in a nominal I and an extreme position II. The groove 4 and the tongue 5 have rounded parts. The rounded tongue fits within the rounded groove. The rounded parts gives the fin sections 1,2 a freedom to rotate relatively to each other to get a cambered shape. Advantageously, the rounded parts and eventually other roundings in the contour of the cross section may make the fin stronger. Unacceptable high local stresses may be prevented by the smooth contour.

Besides the shown embodiments, several alternatives are possible without leaving the scope of protection as defined by the appendant claims. In a variant the tongue may be formed at a tail fin section, wherein the groove may be formed at a front fin section. For example, a further external stop may be created by a pin which may be adjustable to obtain adjustable extreme positions. The shown embodiment is designed as a fin for a surf board. However, the dynamic fin according to the invention is further applicable as for example a rudder, propeller, a roll stabilisation fin for ships, a spoiler or other aerodynamic surface.

Thus, according to the invention a dynamic fin is provided having improved functionality in that the fin sections are easier to mount and demount. In addition, the manufacturing of the dynamic fin is further improved by simplifying the design including the pair of coupling elements. A preferred embodiment is shown, wherein it is even possible to manufacture the dynamic fin completely by a moulding process.

## Claims

1. Dynamic fin comprising at least two parallel arranged fin sections, wherein an orthogonal coordinate system including a first, second and third axis can be defined, wherein the fin sections extend in a direction of the first axis, wherein at least one fin section comprises a rotational axis for installing the fin section by a rotation shaft, which rotational axis extends in the direction of the fin section and enables a rotational movement of the fin section, wherein the fin comprises an end stop for stopping the rotational movement of the fin section to define an extreme position, in which extreme position the fin sections provide a substantially cambered shape to the fin, **characterized in that** the first fin section is in rotation coupled to a second adjacent fin section by a pair of a first coupling element and a complementary second coupling element, wherein the first coupling element is part of the first fin section and the second coupling element is part of the second fin section.

2. Dynamic fin according to claim 1, wherein the first coupling element is formed by a groove which extends in a longitudinal direction along an edge of the first fin section.

3. Dynamic fin according to claim 1 or 2, wherein the first coupling element extends over substantially the whole length of the first fin section.

4. Dynamic fin according to one of the preceding claims, wherein the second coupling element is formed by an outer tongue which is complementary shaped with respect to the first coupling element and extends in a longitudinal direction along an edge of the fin section.

5. Dynamic fin according to one of the preceding claims, wherein the first and/or second coupling element comprises a symmetrical shape in cross section.

6. Dynamic fin according to one of the preceding claims, wherein the first and/or the second coupling element comprise in the first direction a constant shape in a cross section.

7. Dynamic fin according to one of the preceding claims, wherein the fin section comprises a base fin and tip, wherein the constant shape becomes smaller in a direction away from the base.

8. Dynamic fin according to one of the preceding claims, wherein the first coupling element encloses the second coupling element for mounting the fin sections by an axially sliding movement of the fin sections relative to each other.

9. Dynamic fin according to claim 8, wherein a stopper is provided for stopping the axial movement.

10. Dynamic fin according to one of the preceding claims, wherein the groove of the first coupling element comprises in a cross section an inner rounded part for receiving a second coupling element which comprises an outer rounded part in a transversal cross section.

11. Dynamic fin according to one of the preceding claims, wherein the first coupling element comprises a groove having a receiving opening which includes an inner protruding portion and wherein the second coupling element comprises a tongue having an outer protruding portion for locking the second fin section to the first fin section in a direction away from the opening of the groove.

12. Dynamic fin according to one of the preceding claims, wherein at least one end stop is formed by the inner protruding portion.

13. Dynamic fin according to one of the preceding claims, wherein the fin sections are rotatable from one extreme position to another extreme position under a substantially constant resistance.

14. Watercraft provided with a fin according to at least one of the preceding claims.

15. Use of the fin according to one of the preceding claims 1-11 as:
- a keel, rudder, tunnel thruster, propulsion element etc. in a watercraft; or as
- a vane of a turbine, like a wind turbine; or as
- a propulsion element in a motor; or
- a spoiler
